(19) Europäisches Patentamt
European Patent Office
Office européen des brevets

(11) **EP 1 907 633 B1**

(12) **EUROPEAN PATENT SPECIFICATION**

(45) Date of publication and mention
of the grant of the patent:
**27.02.2019 Bulletin 2019/09**

(21) Application number: **06764409.6**

(22) Date of filing: **07.06.2006**

(51) Int Cl.:
*E02B 15/04* *(2006.01)*    *B63B 35/32* *(2006.01)*

(86) International application number:
**PCT/FI2006/000183**

(87) International publication number:
**WO 2006/134201 (21.12.2006 Gazette 2006/51)**

(54) **METHOD AND DEVICE FOR COLLECTING OIL FROM THE SURFACE OF WATER BY USING A WAVE DAMPING SPACE**

VERFAHREN UND VORRICHTUNG ZUR ENTFERNUNG VON ÖL VON DER WASSEROBERFLÄCHE DURCH VERWENDUNG EINES WELLENDÄMPFUNGSRAUMS

PROCÉDÉ ET DISPOSITIF POUR RÉCUPÉRER DU PÉTROLE À LA SURFACE DE L'EAU EN UTILISANT UN ESPACE AMORTISSANT LES VAGUES

(84) Designated Contracting States:
**AT BE BG CH CY CZ DE DK EE ES FI FR GB GR HU IE IS IT LI LT LU LV MC NL PL PT RO SE SI SK TR**

(30) Priority: **17.06.2005 FI 20050659**

(43) Date of publication of application:
**09.04.2008 Bulletin 2008/15**

(73) Proprietors:
• **Suomen Ympäristökeskus**
  **00250 Helsinki (FI)**
• **Akateemiset Konsultit Oy**
  **00610 Helsinki (FI)**
• **Ils, Oy**
  **20100 Turku (FI)**

(72) Inventors:
• **KAHMA, Kimmo**
  **FI-00610 Helsinki (FI)**
• **ERONEN, Harri**
  **FI-21200 Raisio (FI)**
• **MYKKÄNEN, Erkki**
  **Deceased (FI)**

(74) Representative: **Pirhonen, Kari Lennart**
**Patenttitoimisto Kari Pirhonen Oy**
**P.O. Box 71**
**20101 Turku (FI)**

(56) References cited:
WO-A1-2006/061453    GB-A- 1 358 530
GB-A- 1 405 560    US-A- 3 684 095
US-A- 3 922 225    US-A- 4 595 510
US-A- 4 653 421    US-A- 4 673 497

EP 1 907 633 B1

## Description

### SUBJECT OF THE INVENTION

The invention relates to a device described in the preamble of claim 1 for collecting oil from the surface of water by using a wave damping space.

### PRIOR ART

According to a prior-art, oil spilt into water is collected from the water surface by means of various collecting devices, such as e.g. brush collectors, skimmers and equivalent. The main principle of collection here is that oil floating on the water surface is caught on the collecting elements of the collectors, such bristles or rotating plates. From these, the oil is removed e.g. by means of scrapers or other corresponding elements, whereupon the oil thus collected can be transferred into a container. The bristles of brush collectors may be attached to a rotating drum or an endless band, by means of which oil floating on water surface is lifted from water and collected for storage. A brush collector may be placed e.g. on an oil combating vessel, for example attached to the side of the vessel or to a pontoon beside the vessel. The collector may also be placed in a small recess at the side of the vessel. In addition to a collector, generally an oil containment boom is used as well to guide the oil on the water surface to the collector.

Prior-art oil collecting devices generally have the drawback that the collection result deteriorates substantially as the surge height increases. This is because the waves rebound from the side of the vessel or from the wall of the recess, so that the swash of water removes the oil from the collector before it can be taken to the actual collecting elements. The surge may also be high enough to immerse the entire collecting device. In this case, too, the oil caught on the brushes is released back into water and the efficiency of the device deteriorates.

In practice, it has been established that when prior-art oil collecting devices are used, an effective surge height exceeding half a meter already causes substantial disturbance to the collecting devices. When the surge height increases still further, prior-art equipments are almost inefficient. In such circumstances they are no use at all. This is a serious problem, because oil spillages occur more readily in a storm. Even after an oil spillage having occurred in calm weather, wave surge may soon increase enough to prevent the use of oil-fighting equipment.

For example, in an attempt to reduce wave surge near an oil collector, the oil collector is attached to the lee side of the vessel or oil booms are used to protect the oil collector. Also, when placed in the middle of a catamaran, an oil collector can be protected at least partially as it is in shelter between the catamaran hulls. However, such arrangements have not proved successful in practice. In addition to high wave surge, even the oil-fighting vessel swings so heavily that the oil collector at its side is exposed to an excessive wave surge and may even be completely immersed in water.

Better protection against wave surge is provided by methods in which the oily water is conveyed as a flow produced by a pump into a wave damping channel made inside the vessel. Specifications WO 89/10296 and GB-1544109 disclose arrangements where an oil collector is placed inside an oil-fighting vessel or in a channel inside the vessel. However, these arrangements, too, do not eliminate the problems caused by high wave surge and swinging of the vessel.

In the solution disclosed by patent US-4,543,421, to enhance the wave damping effect, plates provided with relatively small holes are mounted in the channels inside the vessel. This solution has the drawback that, although they damp the surge, such plates also effectively obstruct the passage of oil in the channel to the actual oil collector.

In patent GB-1,544,109, the channel inside the vessel is provided with plates that close the channel alternately from the upper and lower edges. Their purpose is to separate water and oil from each other, but they are not designed to damp the wave surge. To damp the wave surge, the device has small ducts which open at a level close to the water surface. This solution has the drawback that the transverse plates in the channel and the small openings obstruct the advance of oil in the channel. Therefore, no oil can be collected.

Patent GB-1,405,560 discloses a device according to the preamble of claim 1, in particular, a barge in which the wave surge is damped by means of a horizontal plate whose length equals half the wavelength to the full wavelength. In high sea, however, the use of such a plate is not possible because there the wavelength is tens, even hundreds of meters, so the required structures would be very large and expensive. Moreover, the damping efficiency of such a plate is not very good because, on meeting the plate, the wave crest, instead of being broken by the plate, may form a separate wave which rolls on along the plate while getting only slightly damped. Increasing the number of plates or adding other structures will not help because the structure will then become still larger.

Document GB 1,405,560 also describes improvements relating to a device for removing oil slicks.

### PROBLEMS IN OIL COLLECTION

The operating principle of the brush-type oil collector is sensitive to reflux. Oil already caught on the brushes is released by reflux. It has been empirically established that the collecting result is poor when the wave height exceeds one meter. This means that wave surge becomes disturbing when wave height exceeds half a meter, and the apparatus becomes inefficient when the wave height increases further.

OBJECT OF THE INVENTION

The object of the present invention is to create a new device for collecting oil from the surface of water that is substantially more effective than prior-art devices.

In the device according to invention the oil on the water surface is passed into a wave damping space, where the surge is damped enough to allow the oil on the water surface to be effectively collected. The surge is damped in the channel in such a way that, with respect to its viscosity and other properties, the oil has a sufficiently wide and unobstructed passage to the oil collector.

The reduction of wave surge in a damping space is based on the use of the following damping mechanisms or damping methods, but the method is not a part of the invention. The invention presented is only the device described in the claims.

    1. wave diffraction,
    2. wave breaking,
    3. wave reflection.
    4. damping of wave flow as it passes through the friction of the walls and openings.

The principal working mechanism or damping method of the damper is diffraction according to item 1 mentioned above. The wave is let in through an opening narrower than the width of the channel and allowed to spread over the whole channel width, with the result that its energy per unit of surface area decreases correspondingly and the wave height is reduced.

The spreading of the wave energy from the opening over the entire width of the channel does not take place immediately but requires a certain distance, which depends on the wave height and period, i.e. the length of the wave period. After this distance, the procedure can be repeated by letting the waves pass through a next opening or gate narrower than the width of the channel into a new space or chamber of a width equal to the channel. The procedure is repeated until the wave surge has been damped sufficiently so that the oil on the water surface can be effectively collected by the collector.

Damping of wave surge by diffraction is not sufficient for continuous operation of the damper. New wave energy keeps continuously entering through the outermost opening, and the energy in the chambers increases until the incoming and outgoing energies are equal. Energy is removed by using the mechanisms of the above-mentioned items 2-4 in a mutually enhancing manner.

The primary method of energy removal in the damper is the mechanism or method of the above-mentioned item 2, i.e. wave breaking. This is achieved by the following methods:

    a) Wave energy is focused by means of oblique partitions, thus increasing the wave steepness so much that the wave is broken.

    b) The waves are reflected, causing the incoming and reflected waves to combine into a wave so steep that it will break.

    c) Water depth is as small as allowed by other functional factors.

The method of item a) is the primary method, for which the plates are positioned in an oblique position at an angle such that that portion of the wave which does not go through the gate is focused into the recess formed by the plate and the channel wall and is not reflected before the increase of wave height due to the focusing leads to breaking of the wave.

The method of item b) is applied together with the method of item a) in such manner that the wave reflected from the bottom of the recess is focused at the other end of the chamber by the second side of the oblique plates into the gate, where its energy density and wave height increase. If a new wave comes into the gate at the same time, then the height of the wave thus summed may rise above the breaking limit. For this reason, the method of item c) is also essential. The shallower the water depth is, the smaller waves will break upon being summed.

The damper thus effectively damps waves whose length is twice the distance between the point of reflection and the gate. The point of reflection need not be located within the same chamber, but it may also be one of the inner chambers.

Method 3 is also applied purely like a cavity damper in such manner that the reflected waves are cancelled out with the incoming wave. The damper works on this principle when the wavelength is about four times the chamber length.

The damper is substantially more efficient than earlier dampers because it damps by many mechanisms which are used in a mutually enhancing manner, instead of damping by only one or at most two mechanisms as prior-art methods do. At the same time, oil advances effectively in the damper because the wave damping elements are not located on the path of the oil.

The solution that works best involves the use of all mechanisms. However, in the embodiment examples presented in some of the figures, not all the mechanisms are in use, so they do not work so well.

DEVICE OF THE INVENTION

The invention also relates to a device for collecting oil from the surface of water, said oil collecting device comprising a pump and an oil collector, such as e.g. a brush collector, skimmer or equivalent.

FEATURES OF THE DEVICE OF THE INVENTION

The device of the invention is characterized in what is described in the characterizing part of the claim 1.

In the device

- in addition to the pump and oil collector, the oil collecting device comprises a surge damping space which provides a sufficiently wide and unobstructed path for oil and at the same time an efficient wave damping function,
- and that the oil collector is disposed in the surge damping space or another space at a point where the surge height is lower than the height of the wave surge entering the damping space.

In the damping channel of the device, the efficiency of the wave breaking action can be further increased by having the depth of the channel decrease in the direction away from the entry opening. The shallow point is preferably at the end of the channel at a distance from the water entry opening. The end of the channel may additionally comprise a part shallowing at a clearly steeper angle to damp the surge. The wave damping channel need not be straight, but it may also have a curved or angular shape, allowing various labyrinth alternatives.

The plates on the walls of the channel that form the gates may be straight, curved or some other shape and they may be oriented perpendicularly away from the channel wall or alternatively inclined against the flow or in the direction of flow. The gates may be located at different distances from each other, so the damping channel is effective for many wavelengths.

The passage of oil will be enhanced if the gates are wider at the entry end of the channel, where the waves are big, and narrower at the end leading to the oil collector. In other words, it will be advantageous if the width of the gates decreases in the direction of advance of the oil and water. The ability of the flow produced by the pump to carry oil through the gate is impaired by waves the more the bigger the waves are and the narrower the gate is.

The passage of oil is enhanced if the corners of the recesses are provided with narrow high apertures placed above the mean water level, through which the water and oil of the wave broken in the recess can penetrate under pressure into the next chamber. These apertures have a width of 1/10 ... 1/5 of the width of the actual gates, and oily water can only get through them when the water surface rises to a high level due to wave focusing and the water is under a high pressure that forces even thick oil through the narrow aperture.

Moreover efficient wave damping is achieved if the oil collector is placed at the middle of the last chamber, where the node of the standing wave arising in the chamber is located and where the wave height is smallest. The oil collector may also be placed in a space beside the channel, in which case the opening into the channel is preferably positioned at the middle of the innermost chamber.

BASIC THEORY OF THE WAVE DAMPER

In oil collection, the damper should allow unobstructed passage of oil through it while at the same time effectively damping the surge. The use of flow resistance for damping the surge energy is in conflict with unobstructed passage of oil. For a sufficient resistance, a narrow opening is required. On the other hand, thick oil will block narrow openings. Therefore, the operation of the damper presented here is primarily based on the use of above-mentioned mechanisms 2...4.

Results relating to sound damping are not directly applicable to water waves. Method 2., i.e. wave breaking, is a possibility characteristic of gravitational water waves that is not available in the case of sound waves. When the damper gets into resonance, the wave height increases in the damper until the wave becomes too steep. The wave becomes unstable, it breaks and the wave energy is effectively damped.

In diagrammatic terms, the basic structure of a damper placed transversely in the vessel is as follows: The most central functional mechanism of the damper is diffraction. The wave let in through an opening narrower than the channel width is allowed to spread over the whole width of the channel, with the result that its energy decreases correspondingly. The wave height damping factor K is now

$$K = \sqrt{b/B}$$

where b is width of the opening and B is the channel width. If the channel contains the next opening, similar damping will occur in it. Thus, the damping provided by N successive chambers is

$$K_{tot} = K_1 * K_2 * \ldots * K_n$$

or in the case of identical chambers

$$K_{tot} = K^n$$

A prerequisite for this is that the chamber provides complete damping of all energy that does not pass through the next opening, or that the wave energy is reflected back into the previous chamber and finally out through the inlet opening of the damper.

The primary damping method in the damper is wave breaking. This is accomplished by the following methods:

1. The water depth is as small as allowed by other functional factors.

2. Wave energy is converged by means of the oblique partitions of the chambers, the wave steepness thus increasing so much that the wave will break.

3. The waves are reflected, causing the incoming and reflected waves to combine into a wave so steep that it will break.

Methods 2 and 3 are used in a mutually enhancing manner. Reflected waves are focused in the conical openings of the oblique partitions. When the chamber length is half the wavelength or a multiple of it, the reflected wave and the incoming wave meet at the narrowest point, where their wave height is greatest. By difference from a resonating sound damper, the wave damper is efficient when the chamber length is equal to half the wavelength or a multiple of it.

A secondary method of damping the energy is by flow resistance in the opening. In the case of big waves, the loss of flow is so large that the shape of the wave is broken and the flow comes as a jet discharged from the opening. As the jet hits the water, it produces whirls in which the energy is damped further.

As the breaking of waves is essential to the operation of the damper, estimations made by applying a hydrodynamic model become practically impossible. Theoretical considerations are therefore based on approximations and model tests controlled by these.

3. Dimensioning of the chambers

In the determining of the chambers, several factors have to be considered.

3.1. Diffraction

The wave has to be allowed to diffract to a width corresponding to the entire width of the channel before the next opening. The diffraction speed depends on the wavelength. Model tests have shown that an angle of 30 degrees works well. Long and tall waves with a high speed of flow do not diffract in a narrow opening, but the water rushes as a jet through the opening and spreads at an angle even narrower than 30 degrees. In the optimization of size of the device, the angle required by waves having different heights and different periods is an essential dimensioning parameter, which is also affected by the speed of the basic flow through the channel.

3.2. Reflection and cancellation

In the same way as a resonating sound damper, the wave damper has a good damping efficiency when the chamber length is equal to a quarter wave or its multiple. In this case, the incoming wave and the reflected wave have a 180-degree phase shift between them and cancel out each other. By using chambers of different lengths, a wider effective damping period range is obtained.

3.3. Reflection and breaking

When the chamber length is equal to a half wavelength or its multiple, the reflected wave and the incoming wave meet at the narrowest point, where their wave height is greatest. In this case, the waves break. Unlike in the case of a resonating sound damper, the wave damper is thus very efficient when the chamber length is equal to a half wavelength or its multiple.

EXAMPLE

Damper dimensioning:

The width of the damping channel, the depth of the channel, the angle of the damping plates relative to the channel wall, the width of the openings of the gates formed between the damping plates as well as the distances between the gates depend on the viscosity of the oil and on the properties of the wave surge to be damped.

An example case:

The viscosity of the oil to be separated from water is such that the oil will cork up in half-meter openings but will go through one-meter openings. In the wave surge, the significant wave height is at most 2.5 m and the duration of the wave period is at most 9 seconds.

Dimensions of the device:

total length of the damping channel = 21 m
angle of damping plates relative to the channel wall $\alpha$ = 30°
inclination of the bottom in the shallowing part = 1/30 - 1/40.

    1. chamber:

        mouth opening, i.e. width of the flow inlet gate = 2 m
        length, i.e. distance to the next mouth opening or gate = 5 m

    2. chamber:
mouth opening = 1.5 m, length 4.5 m,
3. chamber:
mouth opening = 1 m, length = 4 m,
4. chamber:
length = 7.5 m, including the shallowing portion = 4 m at the end of the channel.

EMBODIMENT EXAMPLES

In the following, the devices will be described with reference to a few examples and the attached drawings, wherein

LIST OF FIGURES

Fig. 1a presents diagrammatic side view of a vessel with an oil collector at its side for collecting oil floating on the water surface.

Fig. 1b) presents a diagrammatic top view of the vessel in Fig. 1a and an oil collector placed in the vessel.

Fig. 2 presents a diagrammatic top view of a vessel provided with a surge damping space according to the invention in conjunction with an oil collector.

Fig. 3 presents a diagrammatic cross-sectional view of the vessel in Fig. 2, which has a surge damping space in cooperation with the oil collector. This example is not a part of the invention.

Fig. 4 presents a diagrammatic side view of the surge damping space of the invention disposed in the hull of a vessel according to an embodiment.

Fig. 5 presents a diagrammatic top view of the surge damping space of the invention disposed in the hull of a vessel according to a second embodiment.

Fig. 6 presents a diagrammatic top view of an arrangement of oil collecting equipment placed in the hull of a vessel.

Fig. 7 corresponds to Fig. 6 and presents the oil collecting equipment according to a second embodiment,

Fig. 8 presents a diagrammatic top view of a third embodiment of the oil collecting equipment.

Fig. 9 presents a diagrammatic top view of oil collecting equipment according to a fourth embodiment, placed in the hull of a vessel.

Fig. 10 presents a diagrammatic top view of oil collecting equipment placed on a catamaran.

Fig. 11 presents a diagrammatic cross-sectional view of the catamaran of Fig. 10.

Fig. 12 presents a diagrammatic side view of oil collecting equipment placed in the hull of a vessel.

Fig. 13 presents a diagrammatic top view of a multi-hull vessel with oil collecting equipment placed between the outermost hulls.

Fig. 14 presents a diagrammatic cross-sectional view of a multi-hull vessel with oil collecting equipment placed in its middle.

Fig. 15 presents a diagrammatic side view of a vessel in which a surge damping space according to the invention is oriented in the direction of the hull of the vessel.

Fig. 16 presents a diagrammatic top view of an arrangement of oil collecting equipment placed in the hull of a vessel.

Fig. 17 corresponds to Fig. 16 and illustrates one mode of operation of the oil collecting equipment.

Fig. 18 also corresponds to Fig. 16 and illustrates a second mode of operation of the oil collecting equipment.

Fig. 19 presents a diagrammatic side view of different alternatives regarding oil collecting equipment placed in the hull of a vessel.

Fig. 20 presents a diagrammatic top view of an arrangement of oil collecting equipment with a surge damping channel placed beside the hull of a vessel. This example is not a part of the invention.

Fig. 21 presents a diagrammatic top view of a second arrangement of oil collecting equipment in which the surge damping channel is likewise placed beside the hull of a vessel. This example is not a part of the invention.

Fig. 22-25 present diagrams representing different embodiments of the surge damping channel. This example of Fig. 22 is not a part of the invention.

Fig. 26 presents a diagram representing an embodiment of the surge damping channel. This example is not a part of the invention.

Fig. 27 presents a diagram representing yet another embodiment of the surge damping channel.

Fig. 28 presents a diagrammatic top view of an embodiment of the surge damping channel with a different type of damping plates.

Fig. 29 presents a diagrammatic top view of a surge damping channel and damping plates according to yet another embodiment.

Fig. 30 presents a diagrammatic top view of yet another embodiment of the surge damping channel.

Fig. 31 presents a section taken along line XXXI-XXXI in Fig. 30.

Fig. 32 presents a diagrammatic perspective view of the embodiment of the surge damping channel of Fig. 30.

F33 presents a diagrammatic view of yet another embodiment of the surge damping channel and oil collecting equipment.

Fig. 34 presents a diagrammatic top view of a surge damping channel.

DESCRIPTION OF THE FIGURES

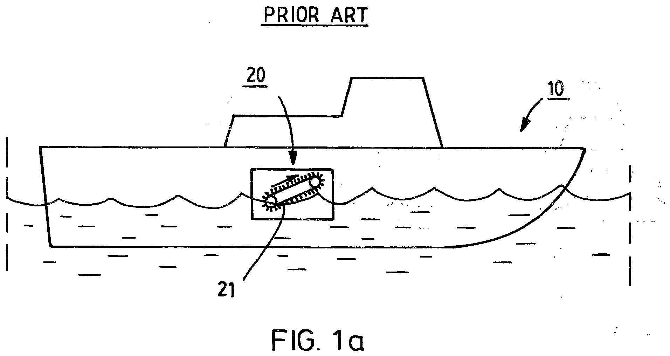

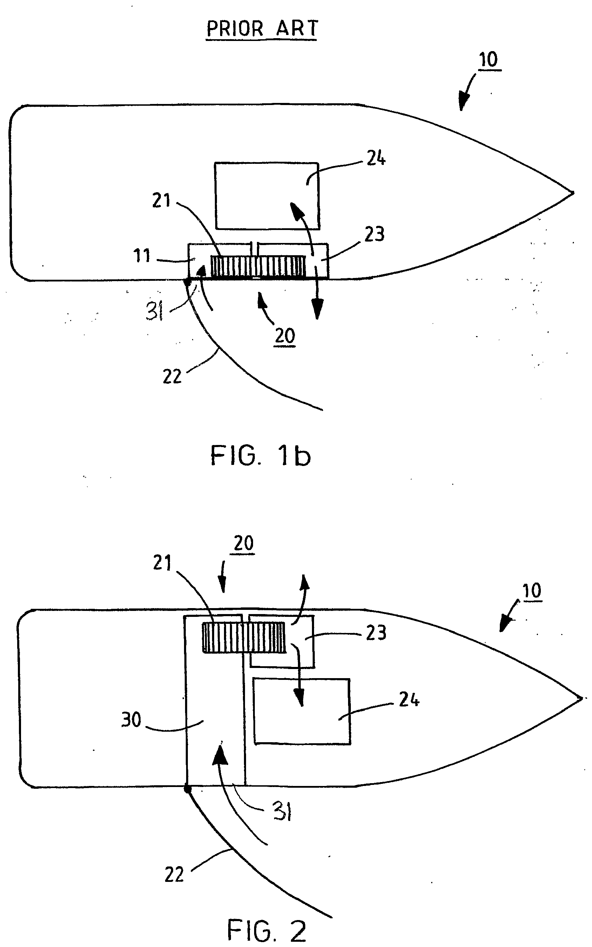

Fig. 1 presents a vessel 10 with an oil collecting equipment 20 placed at its side. In this embodiment, the oil collector of the oil collecting equipment 20 is a prior-art brush collector 21 in which the bristles are attached to an endless band. The oil on the water surface sticks to the bristles of the brush collector 21. By moving the endless band by means of rollers, the oil can be raised from the water, whereupon the bristles are cleaned using e.g. scrapers and the oil is collected in a collecting container.

Fig. 1b presents the vessel 10 of Fig. 1a in top view. In Fig. 1b, the prior-art oil collecting equipment 20 is placed in a small recess 11 in the side of the vessel 10. However, the oil collecting equipment 20 may also be placed completely outside the hull of the vessel 10. In addition, an oil boom 22 is connected to the hull of the vessel to gather oil on the water surface to the vicinity of the brush collector 21. The oil raised by the brush collector 21 is released from the bristles and it then flows into an intermediate container 23. From the intermediate container 23, the oil is pumped into a container 24 for collected oil, and the water admitted along with the oil into the intermediate container is removed back into the water outside the vessel.

It can be seen from Fig. 1a and 1b that in rough surge high waves can be readily reflected from the side of the vessel, with the result that the swashing water deteriorates the performance of the collector. The waves may even completely immerse the oil collector 21, in which case it may even become completely inefficient. Oil spills or their aftermath may occur in hard wind, in which case collecting the oil with prior-art equipment will be impossible due to the high surge produced by the wind.

Fig. 2 presents an oil collecting equipment 20 according to the invention, in which the oil collector is a prior-art brush collector 21 for the sake of example, but it may also be some other type of collector with a surge damping space 30 in conjunction with it. In Fig. 2, oil gathered by means of an oil boom 22 is first passed into a surge damping channel 30 in the hull of the vessel. Placed at the opposite end of this channel is a brush collector 21 and in conjunction with it an intermediate container 23 and a container 24 for collected oil. The function of the surge damping space 30 is to damp the surge outside the vessel 10 so that the wave height at the brush collector 21 is substantially lower than outside the vessel 10. Thus, the waves outside the vessel 10 may surge to a considerable height, but in that case, too, the oil collecting equipment 20 is capable of efficient operation.

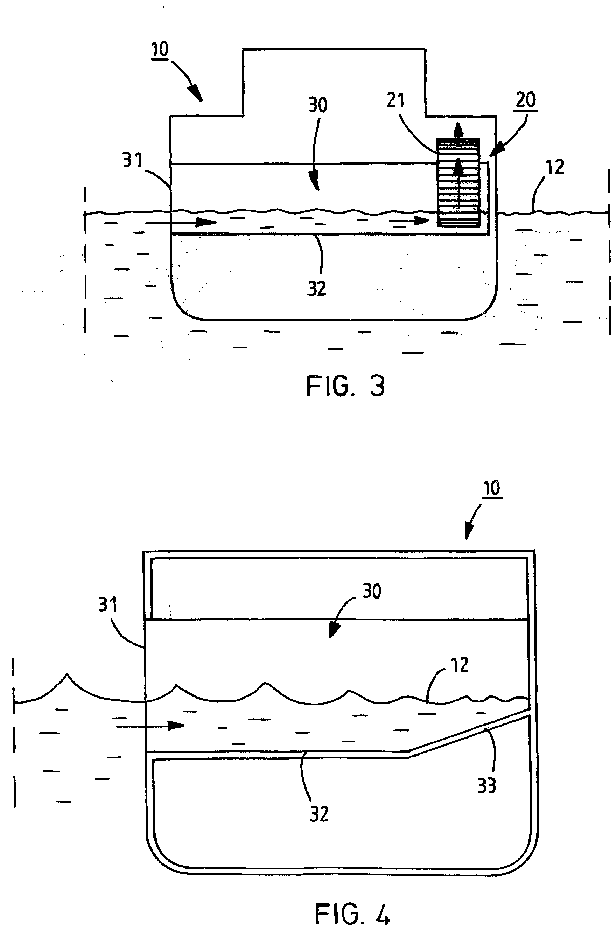

Fig. 3 presents a cross-section of the vessel 10 at the level of the oil collecting equipment 20. This example is not a part of the invention. As can be seen from the figure, the hull of the vessel 10 has inside it a surge damping space 30, which has been so formed that the bottom 32 of the space is below the water surface 12. Thus, the water and the oil on its surface are admitted through an opening 31 into the surge damping space 30. In this space, the wave height is damped so much that the brush collector 21 at the distal end of the space 30 can work efficiently.

Fig. 4 presents a cross-section of the hull of a vessel 10 and a surge damping space 30. It can be seen from the figure that the wave surge proceeding from the opening 31 into the space 30 is clearly damped as it advances in the space 30. The figure shows that the bottom 32 of the surge damping space 30 below the water surface 12 comprises a portion 33 of decreasing depth in the distal part of the space 30. This portion 33 of decreasing depth further enhances the damping of the surge, making it advantageous to place the oil collector near this shallow portion 33.

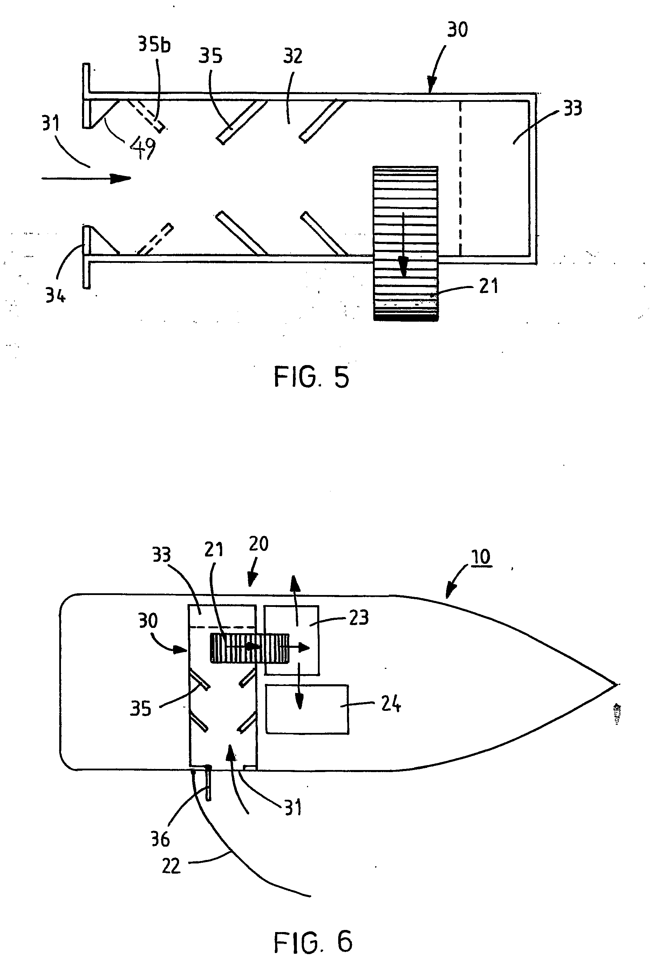

Fig. 5 presents a top view of the surge damping space 30 according to a second embodiment. In this embodiment, the entry opening 31 is smaller than the width of the space, and thus the edges 34 of the opening form a first pair of damping plates in the damping channel. In the embodiment in Fig. 5, the side walls of the space 30 are additionally provided with plates 35 oriented in a direction obliquely towards the entry opening 31, but the plates may also be oriented in a direction away from the entry opening 31, like the plate 35b depicted in broken lines. Further, in the distal part of the damping channel 30 there is a portion 33 of decreasing depth and e.g. a brush collector 21 is placed near it. In Fig. 5, the oil collector 21 is preferably placed at a point where the wave surge is damped as much as possible.

Fig. 6 presents a top view of the hull of a vessel 10 provided with an oil collecting equipment 20. The equipment comprises a surge damping channel 30 having damping plates 35 on the side walls and a portion 33 of decreasing depth in the rear. The entry opening 31 of the channel 30 can be closed with a gate 36. In addition, the figure presents a brush collector 21, a water tank 23 and a container 24 for collected oil.

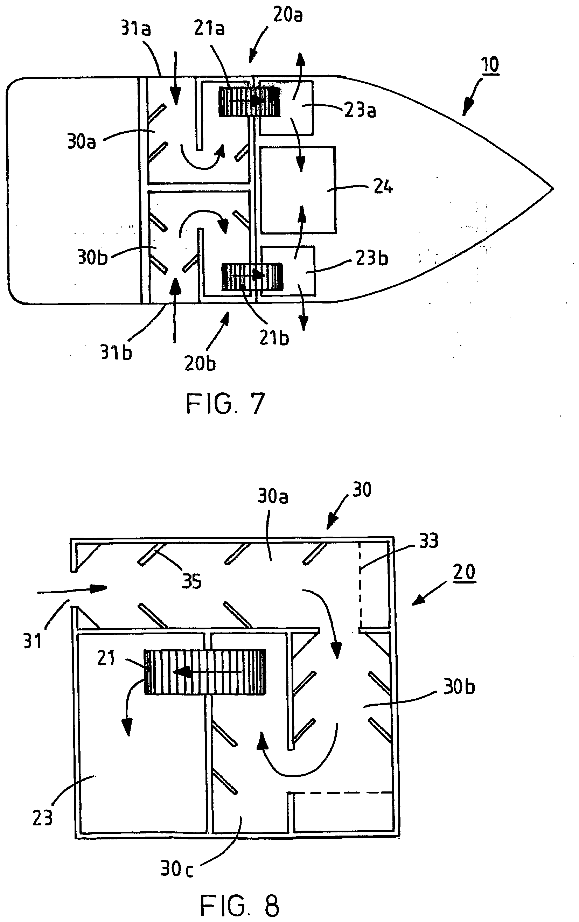

Fig. 7 presents a top view of the hull of a vessel 10 containing two identical oil collecting equipments 20a and 20b, one on either side of the vessel 10. Each oil collecting equipment comprises a surge damping space 30a and 30b and brush collectors 21a and 21b in conjunction with them, as well as intermediate containers 23a and 23b. The two equipments share a common container 24 for collected oil.

Fig. 7 shows that the surge damping spaces 30 and 30b need not be straight channels but may instead consist of labyrinths, which are still more efficient in damping the surge.

Fig. 8 presents yet another embodiment of the oil collecting equipment 20, wherein the surge damping space 30 is a labyrinth consisting of several sections. As shown in the figure, a first section 30a has plates 35 on the side walls and a shallow portion 33. From the vicinity of the shallow portion 33, an opening leads into a second labyrinth section 30b, which has corresponding damping elements. Further, from this section an opening leads into a third labyrinth section 30c, where an oil collector 21 is placed and in connection with it an intermediate container 23. It is obvious that a labyrinth consisting of so many sections damps the wave surge well enough to allow the brush collector 21 to work efficiently even in high surge conditions prevailing outside the vessel.

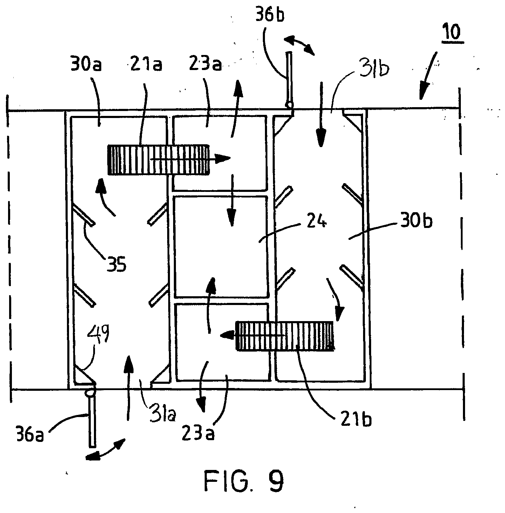

Fig. 9 presents a second solution for placing two oil collecting equipments in the hull of a vessel 10. It can be seen from the figure that the vessel 10 has two surge damping channels 30a and 30b, the lengths of which mainly correspond to the width of the hull of the vessel 10. These damping spaces can be closed with gates 36a and 36, and each channel 30a, 30b is provided with a brush collector 21a, 21b placed at the end opposite the gate. For each collector there is a separate intermediate container 23a, 23b and a common container 24 for collected oil. With such an arrangement of the devices, efficient equipments capable of simultaneously collecting oil from both sides of the vessel 10 are achieved.

Since the surge damping spaces 30a and 30b are provided with gates 36a and 36b, they can, if necessary, be converted into closed spaces, which can also be used as containers for collected oil.

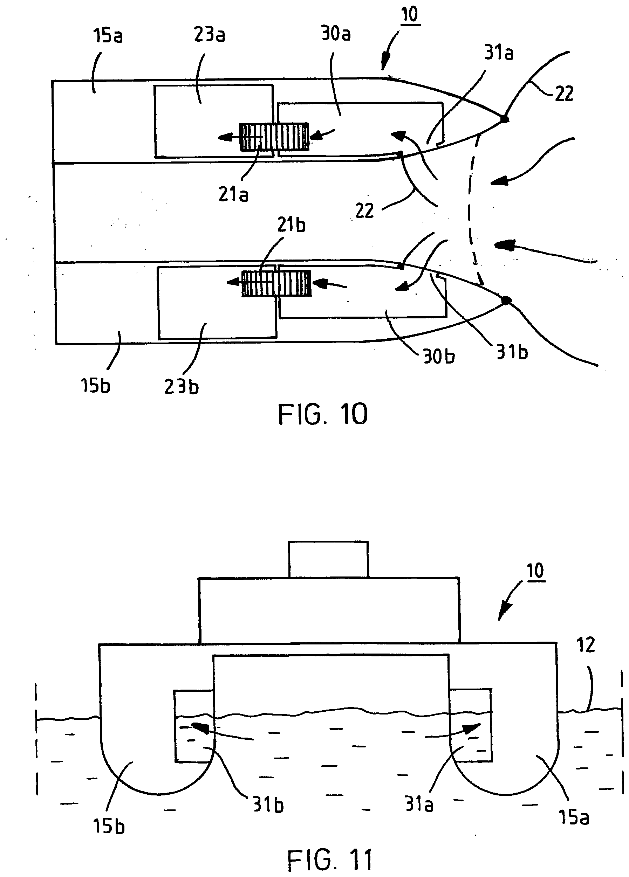

Fig. 10 presents a top view of a vessel 10 with a catamaran hull design, each hull 15a, 15b of which is provided with a longitudinal surge damping channel 30a, 30b and in connection with it a brush collector 21a, 21b and an intermediate container 23a, 23b, respectively. The entry openings 31a and 31b are disposed in the forward part of the hulls 15a and 15b. Placed in connection with the gates are oil booms 22 to guide the oil on the water surface.

Fig. 11 presents the vessel 10 with a catamaran hull in front view. The figure shows the entry openings 31a and 31b of the surge damping channels at the water level 12.

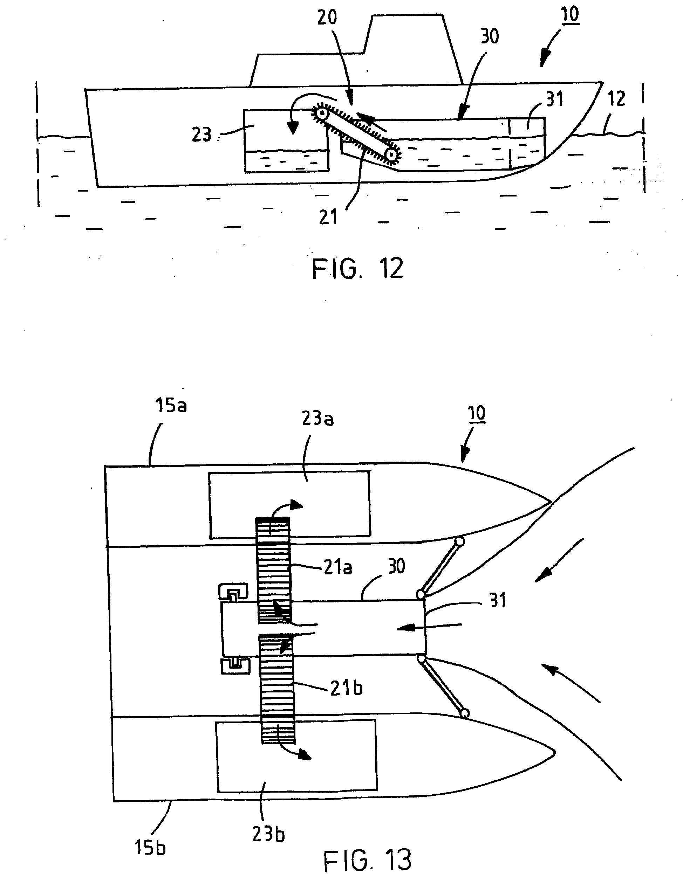

Fig. 12 presents an oil collecting equipment 20 placed in the hull of a vessel 10, comprising a surge damping channel 30 oriented in the longitudinal direction of the vessel 10, a brush collector 21 and an intermediate container 23. The entry opening 31 of the surge damping channel 30 is located in the bow part of the vessel and it is preferably provided with a gate, which is not shown. The arrangement with a longitudinal surge damping channel 30 presented in Fig. 12 represents both a single-hull vessel as well as a multi-hull vessel. In the case of a catamaran, an arrangement as presented in Fig. 12 can be placed in either hull of the catamaran.

Fig. 13 presents a multi-hull vessel 10 with a surge damping space 30 between the hulls 15a and 15b. The surge damping space 30 can function as a common collecting space, with brush collectors 21a and 21b in conjunction with it for the intermediate containers 23a and 23b in the two hulls.

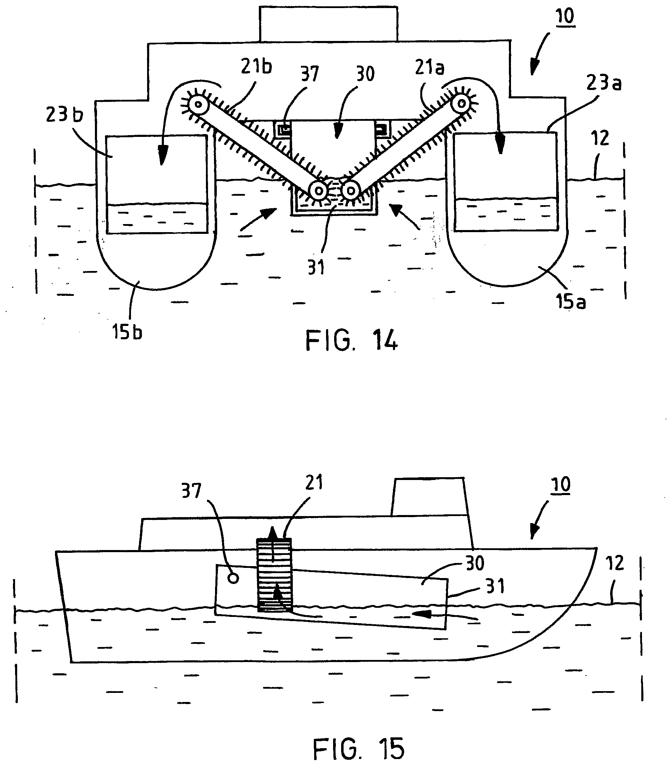

Fig. 14 presents a cross-section of a multi-hull vessel 10 with a surge damping space 30 between its side hulls 15a and 15b. From this space, the oil is collected by brush collectors 21a and 21b into intermediate containers 23a and 23b in the two side hulls. An arrangement like this can also be mechanically implemented in a manner allowing the damping channel 30 between the hulls to be raised above the water level 12 when the vessel is moving without collecting oil from the water surface.

Fig. 15 presents a diagram of a solution in which the surge damping space 30 between the hulls of a multi-hull vessel 10 is pivoted on a shaft 37 so that it can be raised above the water level 12 when the vessel is not collecting oil.

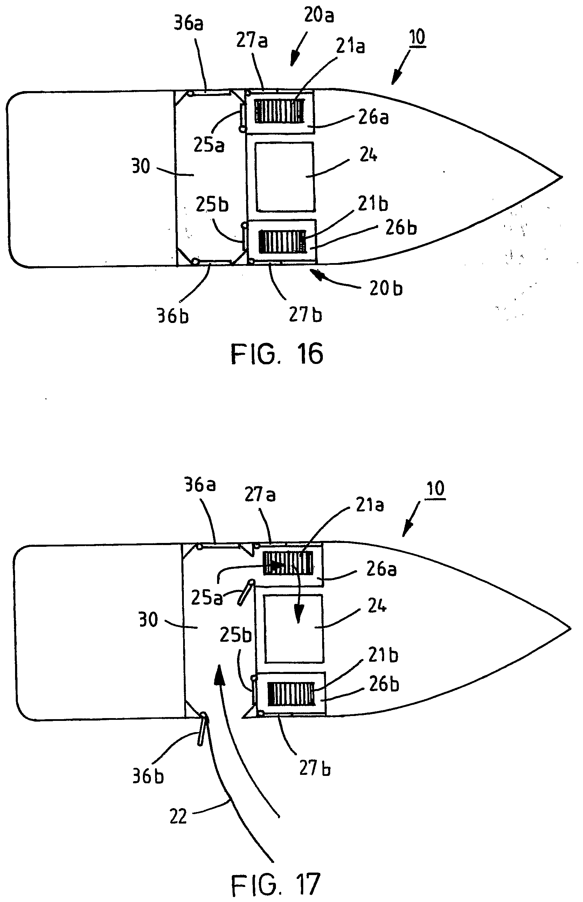

Fig. 16 presents an oil collecting equipment placed in the hull of a vessel 10, comprising a surge damping space 30 and in conjunction with it two oil collecting equipments 20a and 20b. In this example, the oil collectors 21a and 21b, which are brush collectors 21a and 21b for the sake of example, are disposed in the spaces adjacent to the surge damping space 30. From the figure it can be seen that the damping space is provided with four gates, of which two gates 36a and 36b are located at either end of the damping space 30 and another two gates 25a and 25b in their vicinity. Gates 36a and 36b lead directly into the sea on either side of the vessel, whereas gates 25a and 25b lead into the spaces 26a and 26b where the oil collectors 21a and 21b are placed. In addition, the spaces 26a and 26b of the oil collectors 21a and 21b are also provided with gates 27a and 27b, which lead directly into the sea. Alternative ways of operation of the gates are described in greater detail in the following figures.

Fig. 17 illustrates a situation where gate 36b of the surge damping space 30 leading into the sea as well as the gate leading from the damping space 30 into the space 26a of oil collector 21a are open. This situation corresponds to high surge conditions in which oil is collected by means of an oil boom 22 and one 21a of the oil collectors only from one side of the vessel 10.

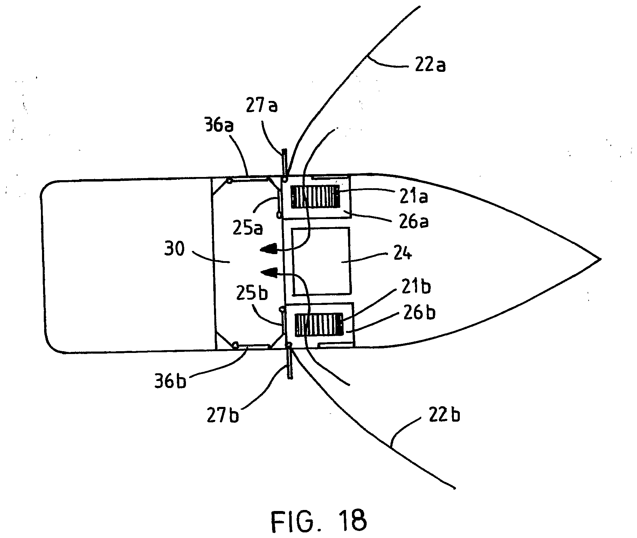

Fig. 18 illustrates an alternative situation of low surge conditions and calm weather, in which all the gates 25a and 25b as well as 36a and 36b of the surge damping space 30 are closed. The oil is now gathered from the sea directly to the oil collectors 21a and 21b and into spaces 26a and 26b by keeping gates 27a and 27b open. In this situation, the surge damping space 30 is not needed for damping the surge, so it can be utilized as an additional oil-collecting container. In this case the oil can be passed into the damping space 30 either directly or via the actual container for collected oil.

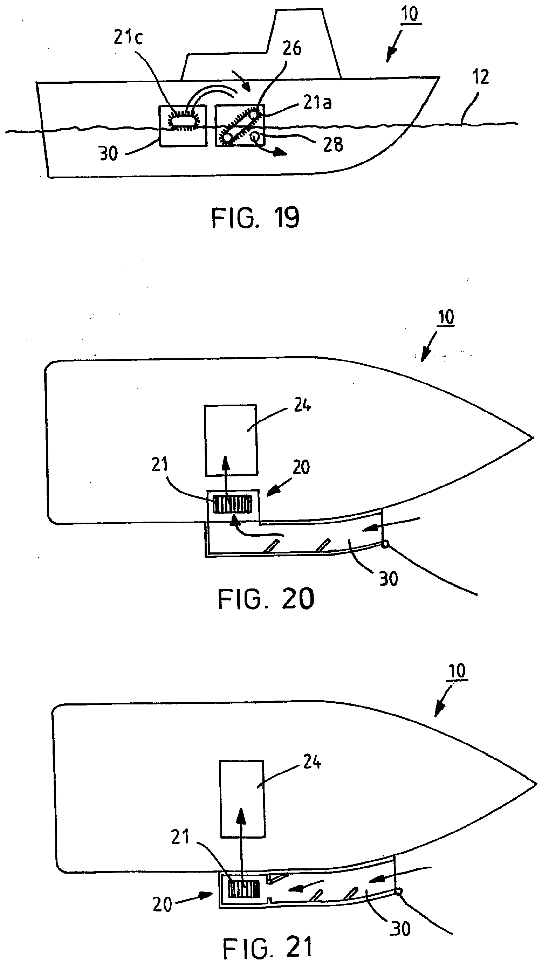

Fig. 19 presents a diagrammatic side view of two different alternatives regarding oil collecting equipments placed in the hull of a vessel 10. In this example, the surge damping space 30 may be provided with a skimmer 21c floating on the water surface and/or with a brush collector 21a in space 26. The figure also shows an opening 28 through which the water cleaned of oil returns back into the sea.

Fig. 20 presents a vessel 10 with an oil collecting device 20 provided with a collector 21, placed in a recess in its hull in a known manner. This example is not a part of the invention. The functional capability of the oil collecting device 20 in rough surge has been substantially improved by adding in conjunction with it a surge damping space 30 according to the invention outside the hull of the vessel 10.

Fig. 21 presents a vessel 10 that originally has no oil collecting device. This example is not a part of the invention. In this case, a device combining both a surge damping space 30 and an oil collecting device 20 has been added to the side of the hull of the vessel 10. In this arrangement, the vessel only has to be provided with a container 24 for collected oil. Even this container can be replaced with e.g. a pontoon or another vessel, in which the oil is collected.

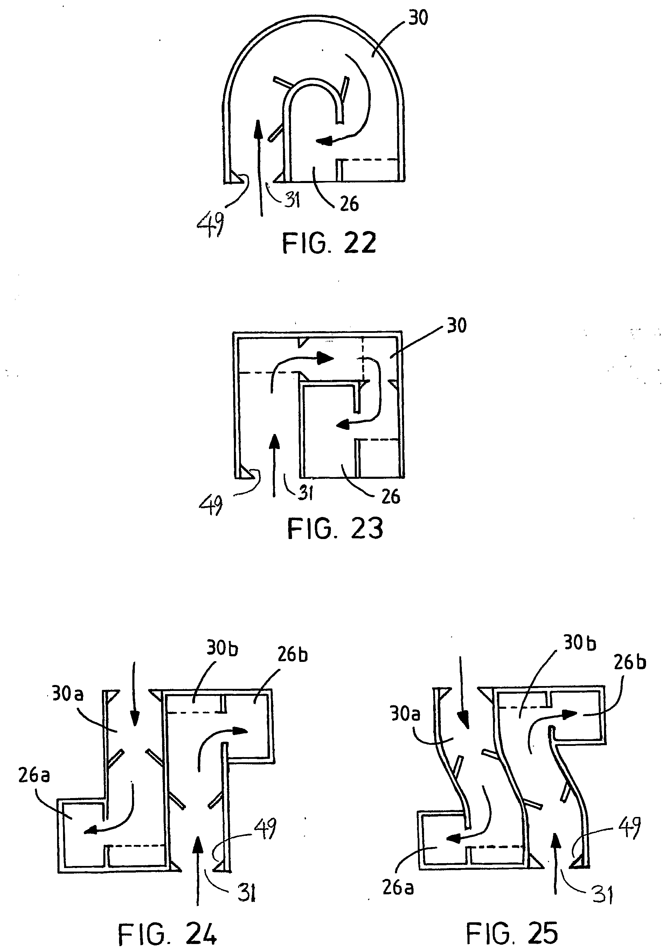

Figures 22-25 present different embodiments of the surge damping channel 30. The channel 30 may have a curved or angular shape and they can also be placed side by side in different ways. The example of Fig. 22 is not a part of the invention.

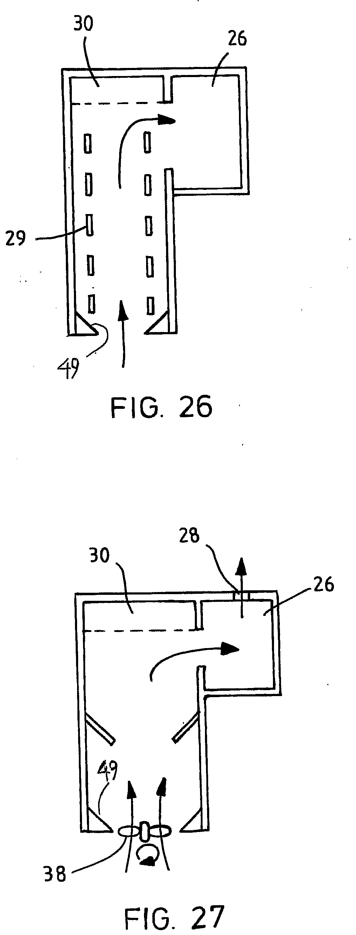

Fig. 26 presents an embodiment of the surge damping channel which has damping partitions 29 provided with openings. This example is not a part of the invention.

Fig. 27 presents yet another embodiment of the surge damping channel, which is provided with a propeller 38 or a corresponding device in conjunction with the entry opening. The main function of the propeller is to promote "chopping" of the collected oil and facilitate admission into the surge damping channel 30 when the oil to be collected is a very thick mass. At the same time, the propeller 38 may slightly increase the flow of water into the surge damping channel 30. The water is discharged into the sea through opening 28.

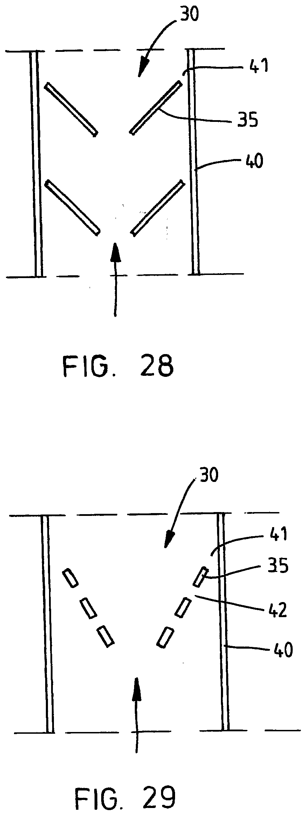

Fig. 28 presents a top view of an embodiment of the surge damping space, i.e. damping channel 30, in which a gap or opening 41 is provided between the damping plate 35 and the side wall 40 of the damping channel 30. The opening 41 may extend all the way from bottom of the damping channel 30 to the top, but it may also be only located at a desired level. According to a preferred embodiment, an opening 41 is only provided at the upper edge of the plate 35.

Fig. 29 presents a top view of an embodiment of the surge damping space or damping channel 30 in which the damping plate 35 is provided with one or more holes or openings 42 at desired points. In this case, the damping plate 35 may have a plurality of openings 42 in its entire area, in which case the damping plate 35 is a kind of perforated plate. There may also be an opening 41 between the damping plates 35 and the side wall of the damping channel 30.

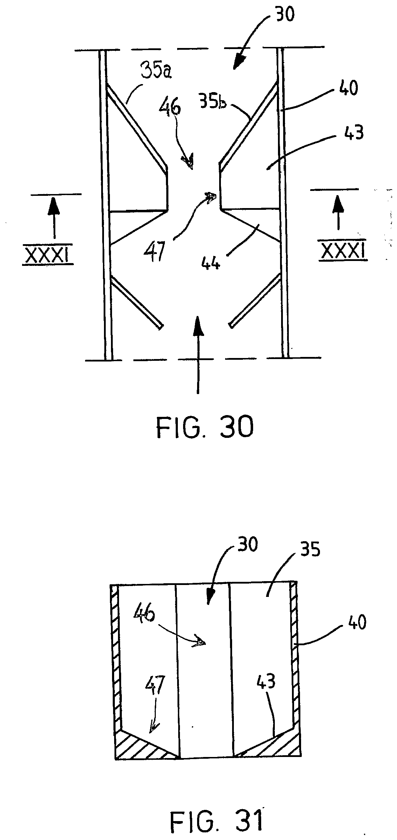

Fig. 30 presents a top view of an embodiment of the surge damping space or damping channel 30 which has a triangular projection 47 placed directly below or beside the damping plate 35 to deflect the flow. In Fig. 30, the projection 47 has at its forward edge a slope or an inclined surface 44, on which the flow rises upwards and then is deflected by the projection 47 towards the opening 46. This flow also causes the flow coming from the gate 46 to be deflected towards the opening 45 and the collector 20.

The cross-sectional view in Fig. 31 shows that the elevation 43 in the damping channel 30 is also an inclined surface whose highest point is located at the edge, i.e. at the side wall 40 of the damping channel 30.

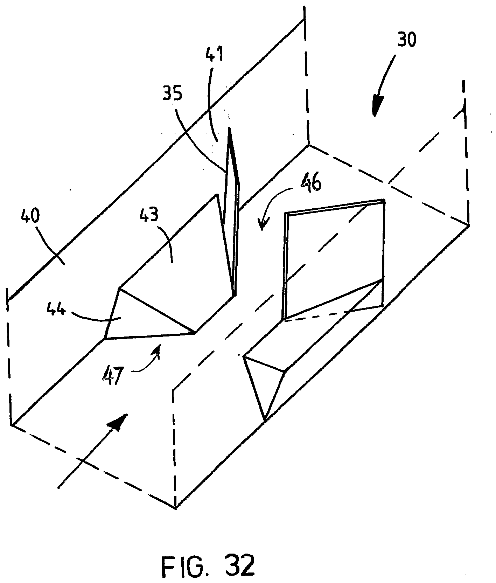

Fig. 32 presents a diagrammatic perspective view of the surge damping channel 30 in Fig. 30. It can be seen from Fig. 32 that, as the flow advances in the damping channel 30, it meets the inclined surface 44 before the elevation 43 in front of the damping plate 35. The elevation 43 in the damping channel 30 and the upward inclination of the bottom of the damping channel 30 in the direction of flow effectively damp the surge in co-operation with the damping plates 35. It is advantageous that, besides the elevation 43, the rest of the bottom of the damping channel 30 also rises in the direction of flow.

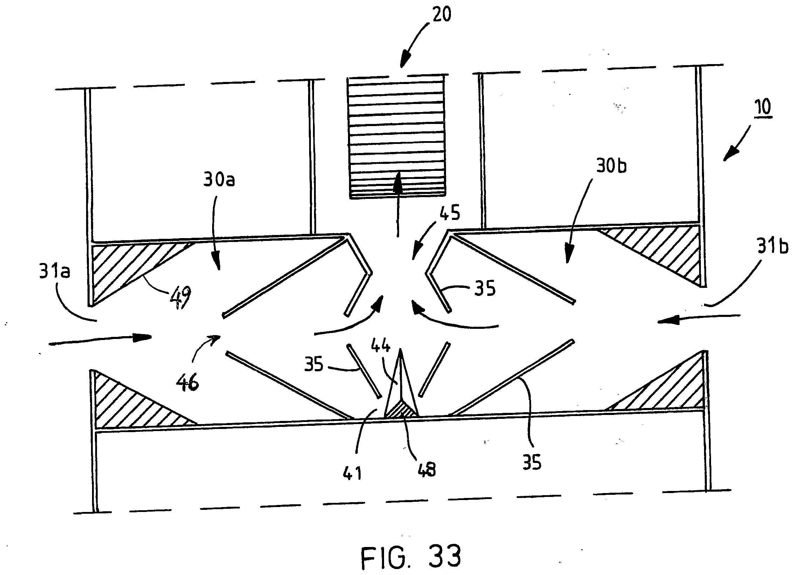

Fig. 33 presents an arrangement with entry openings 31a and 31b of surge damping channels 30a and 30b on either side of a vessel 10, in which case oil can be collected simultaneously from both sides of the vessel 10. The two surge damping channels 30a and 30b are interconnected in such a way that the flow from each channel is passed into one or more oil collecting equipments 20 in the middle part of the vessel 10. Such a solution also provides the advantage that, although there are two surge damping channels 30a and 30b, they take up a relatively small space in the vessel 10.

In the arrangement of Fig. 33, each surge damping channel 30a, 30b may comprise any of the above-mentioned individual solutions in other respects. Thus, a gap or opening 41 may be provided between the damping plates 35 and the side wall 40 of the surge damping channel 30. The damping channel 30 may also have an elevation 43 and an inclined surface 44 where the flow rises upwards. In addition, the bottoms of both surge damping channels 30a and 30b rise in the direction of flow, i.e. towards the middle part of the vessel 10.

From Fig. 33 it can be seen that the arrangement comprises an opening 45 located at the point where the two flows merge and proceed to one or more oil collectors 20. In the area of the opening, the combined channel expands towards the oil collector 20, and the damping plate 35 forms an angle as shown in Fig. 33.

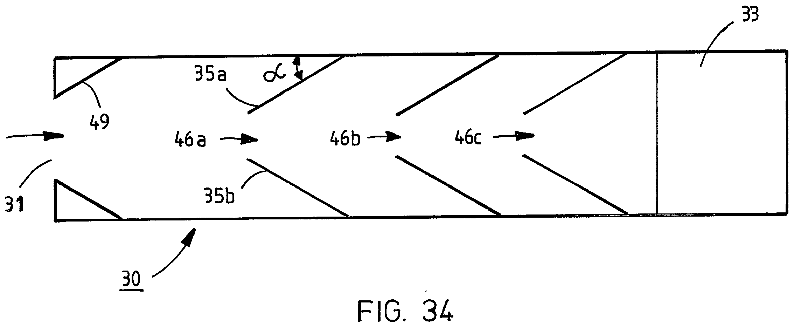

Fig. 34 presents diagrammatic top view of a surge damping channel 30. Water and oil enter the channel 30 through opening 31 into a first damping chamber of the channel 30. The water flow is then deflected and spread over the entire width of the channel guided by surfaces 49. At the same time, the wave height decreases. After that, the flow advances through the gate 46a between damping plates 35a and 35b positioned at an angle of about 30° relative to the channel walls into the next damping chamber, where the flow again spreads over the entire width of the damping chamber 30 and the wave height further decreases. Operation continues in a corresponding manner so that the water flow passes in the same way through the next gates 46b and 46c between damping plates. At the end of the damping channel 30 is a shallowing portion 33 and an oil collector, which is not shown in the figure. In this part of the damping channel 30, the surge height has already been reduced so much that the oil collector can work without problems.

The essential point about the damping channel 30 presented in Fig. 34 is that water and oil advance from one damping chamber into another so that in each damping chamber the water flow is deflected and spread over the entire width of the damping channel 30. It is also essential that the width of the gates between damping plates preferably decreases towards the oil collector. It is also preferable that the lengths of the damping chambers decrease towards the oil collector, and that the damping plates are directed obliquely towards the inlet opening.

The figures presented in the drawings do not show the pump used to remove water from which oil has been separated from the oil collector. However, the pump is necessary part comprised in the oil collecting apparatus.

EXAMPLE DETAILS

- Water and oil are passed through into the damping space through an opening substantially narrower than the width of the damping space, and the wave entering the space is allowed to spread over the whole channel width, with the result that its energy density and wave height are correspondingly reduced.

- Waves having got aside from the gate are focused by means of oblique plates in order to break them.

- Reflected waves are focused by means of oblique plates so that they will break as they meet the next wave in the gate.

- The openings, i.e. gates may be wide enough to allow even thick oil to pass through while the damper still damps sufficiently.

- In the middle of the channel there is a sufficiently wide and unobstructed passage through which oil can flow freely.

- A plurality of gates are arranged one after the other at a sufficient distance from each other so as to allow the surge energy to spread from the gate over the entire channel width before the next gate.

- In the surge damping space, the flow is allowed to pass through an elongated channel having gates formed by plates, the wave damping effect of the gates being based on spreading of the wave energy.

- In the wave damping space, the flow is allowed to pass through an elongated channel containing plate dampers, whose wave damping effect is based on one or more of the following properties of the plate dampers:

- the mutual distances and orientations of the plate dampers vary,

- the plates are disposed at irregular distances between them,

- the plate dampers are a straight, curved or some other shape,

- the plate dampers are oriented perpendicularly away from the channel wall or alternatively inclined against the flow or in the direction of the flow.

- In the wave damping space, the flow is allowed to pass through a channel whose depth decreases in the direction away from the entry opening, preferably so that there is a clearly more steeply shallowing part at the end of the channel.

- In the wave damping space, the flow is allowed to pass through a channel which is straight, curved, angular or labyrinthine.

- The surge damping space forms a channel which is straight, curved or angular, and the bottom of the surge damping space is below the water surface so that the water and the oil on its surface can enter through an opening into the channel, and the bottom of the channel comprises a portion of decreasing depth where the depth decreases in the direction away from the entry opening, preferably so that there is a still more steeply shallowing part at the end of the channel.

- The entry opening of the surge damping space is smaller than the width of the damping space, and the edges of the entry opening form a damping plate pair in the damping channel.

- The surge damping space is a labyrinth consisting of at least two sections, wherein an opening leads from the shallow part of a first section into a second section of the labyrinth.

- The oil collector, such as a brush collector, is placed in the vicinity of the shallow part of the surge damping space, such as at the distal end of the damping space or otherwise in conjunction with the surge damping space, such as via at least one intermediate space.

- An opening, such as the entry opening of the surge damping space can be closed with a gate so as to allow the damping space to be used as a container for collected oil when necessary.

- Placed in conjunction with the opening of the surge damping space is a propeller or some other corresponding device that increases the flow of water and/or assists the entry of oil to be collected into the channel.

- The channel of the surge damping space contains plate dampers and gates formed by these and having a straight, curved or some other shape,

- and the plate dampers are at equal or unequal distances from each other,

- and the plate dampers are oriented perpendicularly away from the channel wall, inclined towards the entry opening, i.e. against the flow, or inclined obliquely away from the entry opening, i.e. in the direction of the flow.

- the plate in the channel of the surge damping space is provided with at least one hole or aperture,

- and the plate dampers are engaged with the wall of the damping channel or a gap or opening is provided between the damping plate and the side wall of the damping channel, said gap or opening being preferably located at the upper edge of the plate.

- The bottom of the surge damping space comprises an elevation placed at or next to a damping panel and provided with an inclined slope or inclined surface where the wave flow rises upwards.

- One or more surge damping spaces is/are are placed in the hull of a vessel or outside the hull of a vessel, in a longitudinal or transverse orientation relative to the vessel,

- and one or more oil collecting equipments are placed in the hull of the vessel or outside the hull of the vessel, in the same space with the surge damping space or in a space adjacent to it.

- Two surge damping channels are placed in the hull of a vessel in a transverse orientation relative to the vessel,

- the damping channels are disposed side by side so that their lengths mainly correspond to the width of the hull of the vessel, or

- the damping channels are disposed one after the other so that their lengths together mainly correspond to the width of the hull of the vessel.

- An entry opening of a damping channel is provided on either side of the vessel.

- that the surge damping channel has been so arranged that the flows entering from each entry opening are passed to one or more oil collecting equipments in the middle of the vessel,

- and preferably a combined channel expands towards the oil collector.

- Each hull of a multi-hull craft, such as a catamaran-hull vessel, is provided with a surge damping space placed longitudinally relative to the vessel and with an oil collector, or

- at least one surge damping space and an oil collector are placed between the hulls, preferably so that the damping space is hinged on a shaft so as to allow it to be raised above the water surface when oil is not being collected.

- The oil collecting device comprises at least one container for collected oil, placed on the oil collecting vessel, on a pontoon or another vessel.

ADDITIONAL REMARKS

It is obvious to a person skilled in the art that different embodiments of the invention may vary within the scope of the claims presented below.

LIST OF REFERENCE NUMBERS

[0091]

| 10 | vessel |
|----|--------|
| 11 | recess |
| 15 | side hull of a catamaran |
| 20 | oil collecting equipment |
| 21 | brush collector |
| 22 | oil boom |
| 23 | intermediate container |
| 24 | container for collected oil |
| 25 | gate |
| 26 | space |
| 27 | gate |
| 28 | water discharge |
| 29 | partition |
| 30 | surge damping space |
| 31 | entry opening |
| 32 | bottom |
| 33 | shallow portion of bottom |
| 34 | edge of entry opening |
| 35 | damping plate |
| 36 | gate |
| 37 | shaft |
| 38 | propeller |
| 40 | side wall |
| 41 | opening at side wall |
| 42 | opening or hole |

43     triangular wall
44     slope or inclined surface
45     opening
46     opening, i.e. gate between plates
47     elevation
48     triangular narrowing
49     widening channel in conjunction with the entry opening

**Claims**

1. Device (20, 30) for collecting oil from the surface (12) of water in open water conditions, the oil collecting device comprising a channel with a bottom (32), two sides, an entry opening (31) and a distal part, the channel defining a wave damping space (30) whereby, in use, the bottom (32) of the space is below the water surface (12), and wherein the channel is provided with damping plates (35) and an oil collector (20) at the distal part of the wave damping space (30),
   **characterized in that**

   - the channel is provided with damping plates (35, 35a, 35b) on both sides of the channel,
   - which damping plates (35, 35a, 35b) are oriented away from the channel side walls (40) of the wave damping space (30, 30a, 30b, 30c) and are arranged in pairs so so as to form gates (46, 46a, 46b, 46c),
   - the entry opening (31) and the gates (46, 46a, 46b, 46c) are narrower than the width of the channel in the wave damping space (30, 30a, 30b, 30c),
   - the entry opening (31) and the gates (46, 46a, 46b, 46c) formed by the damping plates (35, 35a, 35b) form successive sections or damping chambers (30, 30a, 30b, 30c) in the channel, and
   - the distal part of the damping space (30, 30a, 30b, 30c) is provided with a portion (33) of decreasing depth.

2. Device (20, 30) according to claim 1, **characterized in that** the width of the entry opening (31) and the gates (46, 46a, 46b, 46c) between the damping plates (35, 35a, 35b) are different so that the width decreases from entry opening (31) towards the oil collector (21).

3. Device (20, 30) according to claim 1 or 2, **characterized in that** the lengths of the successive sections or damping chambers (30, 30a, 30b, 30c) formed by the entry opening (31) and the gates (46, 46a, 46b, 46c) are different so that the length of the damping chambers (30, 30a, 30b, 30c) decrease towards the oil collector (21).

4. Device (20, 30) according to claim 1, 2 or 3, **characterized in that** the damping plates (35, 35a, 35b) on the side walls (40) of the wave damping space (30, 30a, 30b, 30c) are straight or curved and they are oriented perpendicularly away from the channel side wall (40) or inclined towards the entry opening or inclined obliquely away from the entry opening.

5. Device (20, 30) according to claim any of claims 1-4, **characterized in that** the damping plates (35, 35a, 35b) on the side walls (40) of the wave damping space (30, 30a, 30b, 30c) are positioned in an oblique position towards the entry opening at an angle of about 30° relative to the channel side walls (40) so that recesses are formed by the plate and the channel wall (40) on both sides of the the gate (46, 46a, 46b, 46c).

6. Device (20, 30) according to claim any of claims 1-5, **characterized in that** the wave damping space (30, 30a, 30b, 30c) is provided with at least two gates (46, 46a, 46b, 46c) and at least three sections (30, 30a, 30b, 30c).

7. Device (20, 30) according to claim any of claims 1-6, **characterized in that** the the bottom of the wave damping space (30, 30a, 30b, 30c) is provided with an inclined surface (44) and an elevation (43) in front of the damping plate (35) forming the gate (46, 46a, 46b, 46c).

8. Device (20, 30) according to claim any of claims 1-7, **characterized in that** the shape of the wave damping space (30, 30a, 30b, 30c) is straight, curved, angular or labyrinth shape.

**Patentansprüche**

1. Vorrichtung (20, 30) zur Aufnahme von unter offenen Gewässerbedingungen auf der Wasseroberfläche (12) schwimmendem Öl, wobei die Vorrichtung zur Aufnahme des Öls aus einem Kanal mit einem Boden (32), zwei Seiten, einer Eingangsöffnung (31) und einem distalen Teil besteht, der Kanal einen wellendämpfenden Raum (30) bildet, wobei sich der Boden (32) des Raums im Einsatz unter der Wasseroberfläche (12) befindet und bei dem der Kanal mit Dämpfungsplatten (35) sowie einem Ölkollektor (20) am distalen Teil des Wellendämpfungsraums (30) ausgestattet ist,
   **dadurch gekennzeichnet, dass**

   - der Kanal an beiden Kanalseiten mit Dämpfungsplatten (35, 35a, 35b) ausgestattet ist,
   - die Dämpfungsplatten (35, 35a, 35b) von den Kanalseitenwänden (40) des Wellendämpfungsraums (30, 30a, 30b, 30c) herausragen und so paarweise angeordnet sind, dass sie Pforten (46, 46a, 46b, 46c) bilden,
- die Breiten der Eingangsöffnung (31) und der Pforten (46, 46a, 46b, 46c) geringer sind als die des Kanals im Wellendämpfungsraum (30, 30a, 30b, 30c),
- die Eingangsöffnung (31) und die von den Dämpfungsplatten (35, 35a, 35b) gebildeten Pforten (46, 46a, 46b, 46c) im Kanal hintereinander angeordnete Sektionen oder Dämpfungskammern (30, 30a, 30b, 30c) bilden, und
- der distale Teil des Wellendämpfungsraums (30, 30a, 30b, 30c) einen abgeflachten Teil (33) aufweist.

2. Vorrichtung (20, 30) gemäß Patentanspruch 1, **dadurch gekennzeichnet, dass** die Breiten der Eingangsöffnung (31) und der Pforten (46, 46a, 46b, 46c) zwischen den Dämpfungsplatten (35, 35a, 35b) unterschiedlich sind, sodass sich die Breite von der Eingangsöffnung (31) zum Ölkollektor (21) hin verringert.

3. Vorrichtung (20, 30) gemäß Patentanspruch 1 oder 2, **dadurch gekennzeichnet, dass** die Längen der von der Eingangsöffnung (31) und den Pforten (46, 46a, 46b, 46c) gebildeten hintereinander angeordneten Sektionen oder Dämpfungskammern (30, 30a, 30b, 30c) unterschiedlich sind, sodass sich die Länge der Dämpfungskammern (30, 30a, 30b, 30c) zum Ölkollektor (21) hin verringert.

4. Vorrichtung (20, 30) gemäß Patentanspruch 1, 2 oder 3, **dadurch gekennzeichnet, dass** die Dämpfungsplatten (35, 35a, 35b) an den Seitenwänden (40) des Wellendämpfungsraums (30, 30a, 30b, 30c) gerade oder gebogen ausgeführt und senkrecht zur Kanalseitenwand (40) oder in Richtung Eingangsöffnung geneigt oder schräg von der Eingangsöffnung weg geneigt ausgerichtet sind.

5. Vorrichtung (20, 30) gemäß einem der Patentansprüche 1-4, **dadurch gekennzeichnet, dass** die Dämpfungsplatten (35, 35a, 35b) an den Seitenwänden (40) des Wellendämpfungsraums (30, 30a, 30b, 30c) in einem Winkel von zirka 30° schräg zu den Kanalseitenwänden (40) in Richtung Eingangsöffnung ausgerichtet sind, sodass durch die Platte und die Kanalwand (40) auf beiden Seiten der Pforte (46, 46a, 46b, 46c) Nieschen entstehen.

6. Vorrichtung (20, 30) gemäß einem der Patentansprüche 1-5, **dadurch gekennzeichnet, dass** der Wellendämpfungsraum (30, 30a, 30b, 30c) mit mindestens zwei Pforten (46, 46a, 46b, 46c) und mindestens drei Sektionen (30, 30a, 30b, 30c) ausgestattet ist.

7. Vorrichtung (20, 30) gemäß einem der Patentansprüche 1-6, **dadurch gekennzeichnet, dass** der Boden des Wellendämpfungsraums (30, 30a, 30b, 30c) mit mindestens einer geneigten Oberfläche (44) und einer Erhöhung (43) vor der Dämpfungsplatte (35), die die Pforte (46, 46a, 46b, 46c) bildet, ausgestattet ist.

8. Vorrichtung (20, 30) gemäß einem der Ansprüche 1-7, **dadurch gekennzeichnet, dass** die Form des Wellendämpfungsraums (30, 30a, 30b, 30c) gerade, gebogen, eckig oder labyrinthartig ausgeführt ist.

**Revendications**

1. Dispositif (20, 30) pour collecter l'huile à partir de la surface (12) de l'eau dans les conditions d'eau libre, le dispositif de collecte d'huile comportant un canal avec un fond (32), deux côtés, une ouverture d'entrée (31) et une partie distale, le canal définissant un espace d'amortissement des vagues (30), le fond (32) de l'espace se trouvant alors, lors de l'utilisation, sous la surface (12) de l'eau, et le canal étant muni de plaques d'amortissement (35) et d'un collecteur d'huile (20) dans la partie distale de l'espace d'amortissement des vagues (30),
   **caractérisé en ce que**

   - le canal est muni de plaques d'amortissement (35, 35a, 35b) des deux côtés du canal,
   - lesquelles plaques d'amortissement (35, 35a, 35b) sont orientées dans le sens opposé des parois latérales de canal (40) de l'espace d'amortissement des vagues (30, 30a, 30b, 30c) et sont arrangées en paires de façon à former des portes (46, 46a, 46b, 46c),
   - l'ouverture d'entrée (31) et les portes (46, 46a, 46b, 46c) sont plus étroites que la largeur du canal dans l'espace d'amortissement des vagues (30, 30a, 30b, 30c),
   - l'ouverture d'entrée (31) et les portes (46, 46a, 46b, 46c) formées par les plaques d'amortissement (35, 35a, 35b) forment des sections successives ou chambres d'amortissement (30, 30a, 30b, 30c) dans le canal, et
   - la partie distale de l'espace d'amortissement (30, 30a, 30b, 30c) est munie d'une portion (33) de profondeur décroissante.

2. Dispositif selon la revendication 1, **caractérisé en ce que** la largeur de l'ouverture d'entrée (31) et des portes (46, 46a, 46b, 46c) entre les plaques d'amortissement (35, 35a, 35b) sont différentes de façon à ce que la largeur décroît en allant de l'ouverture d'entrée (31) vers le collecteur d'huile (21).

3. Dispositif (20, 30) selon la revendication 1 ou 2, **ca-**

**ractérisé en ce que** les longueurs des sections successives ou chambres d'amortissement (30, 30a, 30b, 30c) formées par l'ouverture d'entrée (31) et les portes (46, 46a, 46b, 46c) sont différentes de façon à ce que la longueur des chambres d'amortissement (30, 30a, 30b, 30c) décroît vers le collecteur d'huile (21).

4. Dispositif (20, 30) selon la revendication 1, 2 ou 3, **caractérisé en ce que** les plaques d'amortissement (35, 35a, 35b) sur les parois latérales (40) de l'espace d'amortissement des vagues (30, 30a, 30b, 30c) sont droites ou courbées et qu'elles sont orientées perpendiculairement dans le sens opposé de la paroi latérale de canal (40) ou inclinées vers l'ouverture d'entrée ou inclinées obliquement dans le sens opposé de l'ouverture d'entrée.

5. Dispositif (20, 30) selon l'une quelconque des revendications 1 à 4, **caractérisé en ce que** les plaques d'amortissement (35, 35a, 35b) sur les parois latérales (40) de l'espace d'amortissement des vagues (30, 30a, 30b, 30c) sont positionnées dans une position oblique vers l'entrée d'ouverture à un angle d'environ 30° par rapport aux parois latérales de canal (40) de façon à ce que des cavités sont formées par la plaque et la paroi de canal (40) des deux côtés de la porte (46, 46a, 46b, 46c).

6. Dispositif (20, 30) selon l'une quelconque des revendications 1 à 5, **caractérisé en ce que** l'espace d'amortissement des vagues (30, 30a, 30b, 30c) est muni d'au moins deux portes (46, 46a, 46b, 46c) et d'au moins trois sections (30, 30a, 30b, 30c).

7. Dispositif (20, 30) selon l'une quelconque des revendications 1 à 6, **caractérisé en ce que** le fond de l'espace d'amortissement des vagues (30, 30a, 30b, 30c) est muni d'une surface inclinée (44) et d'une élévation (43) devant de la plaque d'amortissement (35) formant la porte (46, 46a, 46b, 46c).

8. Dispositif (20, 30) selon l'une quelconque des revendications 1 à 7, **caractérisé en ce que** la forme de l'espace d'amortissement des vagues (30, 30a, 30b, 30c) est droite, courbée, angulaire ou en forme de labyrinthe.

PRIOR ART

FIG. 1a

PRIOR ART

FIG. 1b

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

FIG. 17

FIG. 18

FIG. 19

FIG. 20

FIG. 21

FIG. 22

FIG. 23

FIG. 24

FIG. 25

FIG. 26

FIG. 27

FIG. 28

FIG. 29

FIG. 30

FIG. 31

FIG. 32

FIG. 33

EP 1 907 633 B1

FIG. 34

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 8910296 A
- GB 1544109 A
- US 4543421 A
- GB 1405560 A